# FASCICULE DE BREVET EUROPEEN

(11) **EP 2 382 106 B1**
(45) Date de publication et mention de la délivrance du brevet: **19.02.2014**
(21) Numéro de dépôt: 10723174.8
(22) Date de dépôt: 05.01.2010
(51) Int. Cl.: B60K 6/28, B60W 10/26, H02J 7/34, H02J 7/00

(54) **PROCEDE DE PILOTAGE D'UNE UNITE DE STOCKAGE D'ENERGIE DANS UN SYSTEME MICRO-HYBRIDE POUR VEHICULE**
VERFAHREN ZUR STEUERUNG EINER ENERGIESPEICHEREINHEIT IN EINEM MIKRO-HYBRID-SYSTEM FÜR EIN FAHRZEUG
METHOD FOR CONTROLLING AN ENERGY STORAGE UNIT IN A VEHICLE MICRO-HYBRID SYSTEM

(30) Priorité: 12.01.2009 FR 0950118
(43) Date de publication de la demande: 02.11.2011
(73) Titulaire: Valeo Equipements Electriques Moteur, 94046 Créteil Cedex (FR)
(72) Inventeur: DESSIRIER, Bruno, F-78100 St Germain En Laye (FR); RANIER, Marc, F-94290 Villeneuve Le Roi (FR); NEWIADOMY, Serge, F-93390 Clichy Sous Bois (FR); SOUCAZE-GUILLOUS, Benoit, F-93400 Bondy (FR); MASSON, Philippe, F-91330 Yerres (FR); SARDAT, Pierre, F-93340 Le Raincy (FR); CHEMIN, Michaël, F-51700 Festigny (FR); MATT, Jean-Claude, F-21000 Dijon (FR)
(86) Numéro de dépôt international: PCT/FR2010/050006
(87) Numéro de publication internationale: WO 2010/079296

(56) Documents cités:
- EP-A- 1 035 627
- EP-A- 1 247 979
- WO-A-2009/001001
- US-A- 5 713 426

## Description

La présente invention est applicable de manière générale dans le domaine automobile. Plus particulièrement, l'invention concerne un procédé de pilotage d'une unité de stockage d'énergie à supercondensateurs dans un système micro-hybride pour véhicule apte à assurer des fonctions d'alternateur, de démarreur, d'arrêt-relance automatique du moteur thermique du véhicule, de freinage récupératif et d'assistance en couple, l'unité de stockage d'énergie comprenant une pluralité de cellules élémentaires de supercondensateur montées en série.

L'invention concerne également un système micro-hybride conçu pour une mise en oeuvre du procédé.

Pour réduire la consommation de carburant des véhicules automobiles, et par voie de conséquence la pollution qu'ils génèrent, il est connu d'équiper un véhicule d'un système micro-hybride, par exemple à alterno-démarreur, autorisant un mode de freinage récupératif.

Il est également connu de l'entité inventive, un système micro-hybride du type ci-dessus comportant une machine électrique tournante, un convertisseur alternatif-continu réversible, une unité de stockage d'énergie à supercondensateurs et un convertisseur de tension continu-continu réversible.

L'unité de stockage d'énergie à supercondensateurs est formée d'une pluralité de condensateurs de très grande capacité appelés «supercondensateur», «ultra-capacité» ou «UCAP» par l'homme du métier.

L'énergie électrique récupérée au moyen de la machine électrique tournante est stockée dans les supercondensateurs et est restituée ensuite pour différents usages, notamment pour alimenter des consommateurs sous une tension continue flottante supérieure à la tension batterie.

Compte tenu des valeurs nominales de tension disponibles actuellement pour les supercondensateurs, il est connu d'assembler ceux-ci en série de manière à former une unité de stockage d'énergie à supercondensateurs apte à supporter les valeurs de tension habituellement présentes dans un système micro-hybride à freinage récupératif comme indiqué ci-dessus.

Dans ce système, les disparités existant sur les valeurs nominales de tension et de capacité des supercondensateurs ont amené les concepteurs à prévoir des circuits électroniques d'équilibrage.

Ces circuits électroniques d'équilibrage ont essentiellement pour fonction de protéger les supercondensateurs contre des tensions de charge trop élevées pouvant provoquer des claquages en tension ou un vieillissement prématuré de l'unité capacitive. De plus, une certaine homogénéité entre les tensions de charge des différents supercondensateurs, facilitant l'exploitation de l'unité capacitive, est obtenue grâce à ces circuits d'équilibrage. L'introduction des circuits d'équilibrage a permis une avancée technique en termes de fiabilité et de durée de vie des packs de supercondensateurs.

Ainsi, dans le document US5713426, il est décrit un véhicule hybride comprenant un moteur à combustion interne, un générateur entraîné par le moteur, et un stockeur d'énergie électrique sous la forme d'une batterie de supercondensateurs de très grande capacité. Un dispositif de charge du stockeur d'énergie est également prévu et comporte des moyens d'équilibrage de tension qui surveillent la tension aux bornes de chaque cellule de supercondensateur et limite leur charge à une tension maximale de manière à éviter toute détérioration de celles-ci.

Le demandeur, dans sa demande de brevet WO2009/00101A intitulée « Procédé de pilotage de système micro-hybride pour véhicule, ainsi qu'unité de stockage d'énergie et système micro-hybride pour la mise en oeuvre de celui-ci », a défini un ensemble d'informations représentatives de l'état d'une unité de stockage d'énergie électrique incluse dans un système micro-hybride à freinage récupératif.

Cette demande de brevet décrit un procédé de pilotage d'une unité de stockage d'énergie à supercondensateurs incluse dans un système micro-hybride pour véhicule automobile apte à assurer des fonctions d'alternateur, de démarreur, d'arrêt-relance automatique du moteur thermique du véhicule, de freinage récupératif et d'assistance en couple, l'unité de stockage d'énergie comprenant une pluralité de cellules élémentaires de supercondensateur montées en série et délivrant des informations sur son état interne, les informations délivrées par l'unité de stockage d'énergie incluant une information de tension élémentaire maximum provenant de la cellule élémentaire la plus chargée et une information de température sur la température de l'unité de stockage d'énergie, le procédé comprenant les étapes de comparer l'information de tension élémentaire maximum à un premier seuil de tension, comparer l'information de température à un premier seuil de température, et décider d'une limitation de la disponibilité des fonctions lorsque l'information de tension élémentaire maximum atteint le premier seuil de tension pendant une durée prédéterminée et/ou lorsque l'information de température atteint le premier seuil de température.

L'invention propose de mettre à profit les informations disponibles dans le procédé selon WO2009/00101 A, représentatives de l'état de l'unité de stockage d'énergie. pour améliorer le pilotage de l'unité de stockage d'énergie.

Selon un premier aspect, l'invention concerne un procédé de pilotage tel que défini dans la revendication 1 ci-annexée.

Selon un autre aspect, l'invention concerne également un système micro-hybride pour véhicule automobile, comprenant une unité de stockage d'énergie ayant une pluralité de cellules élémentaires de supercondensateur montées en série et délivrant des informations sur son état interne, système tel que défini dans la revendication 7 ci-annexées.

D'autres avantages et caractéristiques de la présente invention apparaîtront plus clairement à la lecture de la description ci-dessous de plusieurs formes de réalisation particulières en référence aux dessins annexés, dans lesquels :
- la Fig.1 est un bloc-diagramme général d'une forme de réalisation particulière d'un système micro-hybride selon l'invention;
- la Fig.2 montre la structure interne d'une unité de stockage d'énergie comprise dans le système de la Fig.1 et formée d'une pluralité de cellules élémentaires de supercondensateur ;
- la Fig.3 montre la structure interne d'un module de pilotage de l'unité de stockage d'énergie de la Fig.2 ;
- les Figs.4A à 4C sont des courbes montrant différents cas d'évolution de la tension aux bornes de la cellule élémentaire de supercondensateur la plus chargée ; et
- la Fig.5 montre différents modes de fonctionnement du système de la Fig.1, introduisant une limitation des fonctions avec la température.

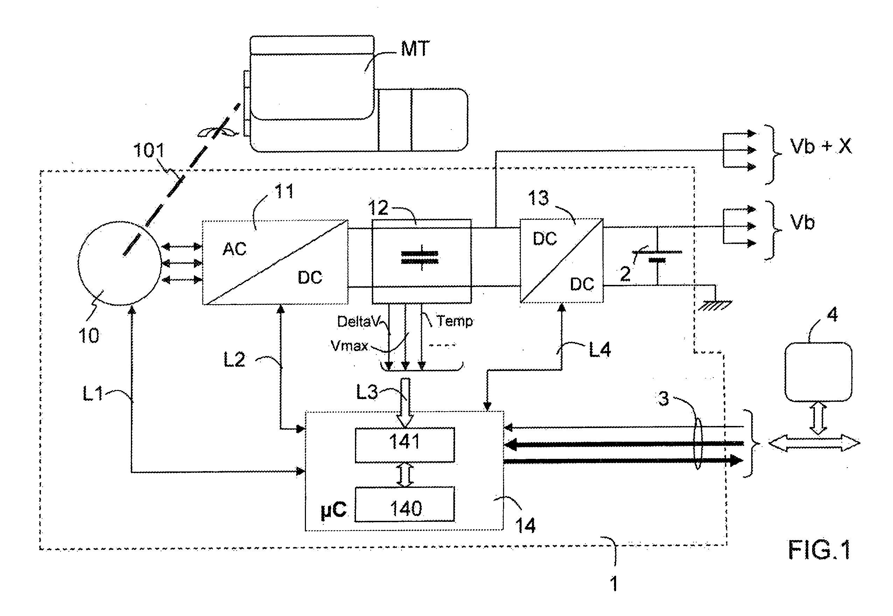

En référence à la Fig.1, il est maintenant décrit une forme de réalisation particulière 1 d'un système micro-hybride à freinage récupératif selon l'invention.

Comme montré à la Fig.1, dans cette forme de réalisation particulière, le système micro-hybride 1 selon l'invention comprend essentiellement une machine électrique tournante 10, un convertisseur alternatif-continu (AC/DC) réversible 11, une unité de stockage d'énergie 12, un convertisseur de tension continu-continu (DC/DC) 13 et un microcontrôleur 14.

Le système micro-hybride 1 est relié à un réseau de bord bi-tension du véhicule capable de fournir une tension continue basse Vb et une tension continue haute flottante Vb+X.

La tension continue basse Vb est généralement celle de 12 V d'une batterie au plomb 2 équipant le véhicule. De préférence, la tension Vb pourra être utilisée pour alimenter dans le véhicule des consommateurs demandant une valeur de tension relativement stable, tels que les dispositifs d'éclairage et de signalisation.

Dans cette forme particulière de réalisation particulière, la tension continue Vb+X varie par exemple entre 12 et 60 V et est disponible aux bornes de l'unité de stockage d'énergie 12 dont la charge en tension est dépendante notamment du fonctionnement en freinage récupératif de la machine électrique tournante 10.

La tension Vb+X peut être utilisée prioritairement pour alimenter des consommateurs acceptant une tension variable tels que par exemple un dispositif de dégivrage. Cependant, dans certaines applications, la tension Vb+X pourra aussi être utilisée pour alimenter, à travers un convertisseur DC-DC dédié (non représenté), un consommateur demandant une tension continue stable, par exemple un dispositif autoradio alimenté sous 12 V. De plus, la tension Vb+X dans certaines applications est aussi utilisable pour alimenter avec une tension supérieure à 12 V la machine électrique tournante 10 fonctionnant en mode démarreur ou moteur.

Comme cela est représenté à la Fig.1, la machine électrique tournante 10 est couplée mécaniquement, liaison 101, à un moteur thermique MT du véhicule. La machine 10 est ici une machine triphasée de type alterno-démarreur qui, outre les modes de fonctionnement en démarreur et alternateur, est apte à fonctionner également en mode de freinage récupératif et en mode d'assistance en couple. Dans le mode d'assistance en couple, la machine 10 fournit un couple mécanique additionnel pour la traction du véhicule en complément de celui fourni par le moteur thermique MT.

Le convertisseur AC/DC 11 est un dispositif réversible et permet, lorsque la machine électrique tournante 10 doit fonctionner en mode moteur/démarreur, une alimentation de la machine 10 avec des tensions alternées triphasées obtenues à partir d'une tension continue présente aux bornes de l'unité de stockage d'énergie 12 , et, lorsque la machine électrique tournante 10 doit fonctionner en mode alternateur, un redressement sous la forme d'une tension continue redressée des tensions triphasées fournies par la machine 10. Cette tension continue redressée charge l'unité de stockage d'énergie 12 et, à travers le convertisseur DC-DC 13, la batterie 2.

L'unité de stockage d'énergie 12 est ici formée essentiellement d'un ensemble de supercondensateurs montés en série et de circuits électroniques appropriés.

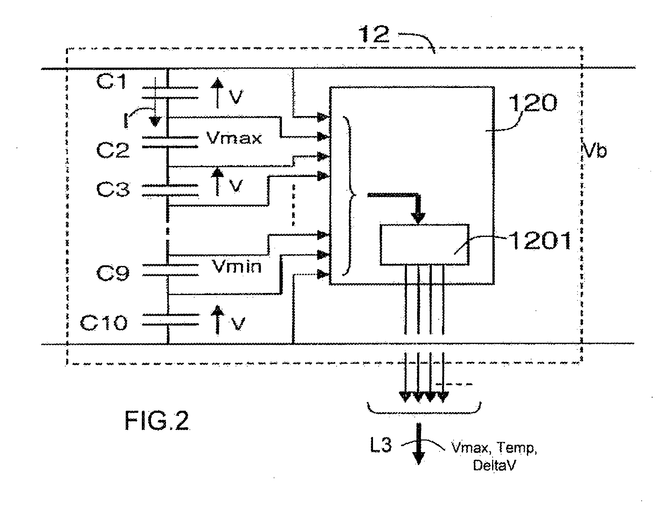

L'unité de stockage d'énergie 12 est décrite en détail par la suite en référence à la Fig.2, et comporte, dans cette forme de réalisation, dix éléments supercondensateurs C1 à C10 montés en série.

L'unité de stockage d'énergie 12 autorise, en se chargeant à la tension continue délivrée par le convertisseur AC/DC 11, un stockage d'énergie électrique lorsque la machine électrique tournante 10 fonctionne en mode de freinage récupératif ou en mode alternateur. L'énergie stockée dans l'unité de stockage d'énergie 12 peut être restituée sur le réseau de tension Vb+X pour alimenter différents consommateurs et, dans certains cas, sur le réseau de tension Vb, à travers le convertisseur DC/DC 13, par exemple lorsque la machine 10 ne débite pas et que la batterie 2 est incapable de répondre à une sollicitation de pic de courant sur le réseau de tension Vb. De plus, l'énergie stockée dans l'unité de stockage d'énergie 12, comme déjà indiqué plus haut, peut être utilisée pour un démarrage du moteur thermique ou une assistance en couple de celui-ci sous une tension Vb+X qui peut être très sensiblement supérieure aux 12 V classiques, facilitant ainsi une fourniture par la machine tournante 10 de couples mécaniques importants requis dans le cas de gros moteurs thermiques.

Le convertisseur DC/DC 13 est un dispositif réversible et permet, d'une part, un transfert d'énergie vers le réseau de tension Vb pour alimenter les consommateurs et charger la batterie 2 et, d'autre part, un transfert d'énergie dans le sens inverse à partir de la tension 12V de la batterie 2 pour charger l'unité de stockage d'énergie 12 si nécessaire et alimenter le convertisseur AC/DC 11 lorsque la machine tournante 10 fonctionne en moteur / démarreur.

Le microcontrôleur 14 gère le fonctionnement du système micro-hybride 1 à partir d'informations représentatives de l'état interne du système micro-hybride 1 et de l'état du véhicule.

Un module de stratégies de pilotage 140 est implémenté dans le microcontrôleur 14 et coopère avec un module de pilotage 141, également implémenté dans le microcontrôleur 14 et dédié à l'unité de stockage d'énergie 12, de manière à piloter le système micro-hybride 1. Des informations d'état et des commandes peuvent être échangées entre le microcontrôleur 14 et différents éléments fonctionnels du système micro-hybride 1 à travers des liaisons d'échange de signaux. Des liaisons d'échange de signaux L1, L2, L3 et L4 entre le microcontrôleur 14 et les éléments 10, 11, 12 et 13 sont représentées à la Fig.1.

Comme montré aussi à la Fig.1, un bus de communication de données 3, par exemple de type CAN, est également prévu pour des échanges d'information entre le système micro-hybride 1 et une ou plusieurs unités électroniques de commande (ECU) 4 du véhicule. Des informations telles qu'un appui sur la pédale de frein ou sur la pédale d'accélérateur peuvent ainsi être transmises au système micro-hybride 1 par une unité ECU 4 à travers le bus de communication de données 3.

En référence plus particulièrement à la Fig.2, il est maintenant décrit en détail l'unité de stockage d'énergie 12 et des signaux Vmax, Temp et DeltaV produits dans celle-ci et fournis au module de pilotage 141 à travers la liaison d'échange de signaux L3 avec le microcontrôleur 14.

Comme montré à la Fig.2, l'unité de stockage d'énergie 12 comporte essentiellement, dans cette forme de réalisation, dix éléments supercondensateurs C1 à C10 montés en série ainsi que des circuits électroniques 120. Ces éléments supercondensateurs C1 à C10 forment autant de cellules élémentaires de supercondensateur montées en série et comprises dans l'unité 12.

Des circuits d'équilibrage, intégrés dans les circuits 120, sont donc prévus de manière à équilibrer les tensions aux bornes des éléments supercondensateurs et éviter ainsi des dépassements de tension susceptibles de provoquer des claquages ou un vieillissement prématurés de ces éléments. Des circuits d'équilibrage pour les assemblages d'éléments supercondensateurs sont connus de l'homme du métier et ceux-ci ne seront pas décrits dans la présente demande.

Les circuits 120 comportent également des circuits de mesure et d'interface 1201 aptes à produire des signaux de santé et de pilotage de l'unité 12, à savoir, notamment les signaux Vmax, Temp et DeltaV qui vont être décrits dans les paragraphes ci-après.

Les signaux Vmax, Temp et DeltaV permettent au module de pilotage 141 de gérer de manière optimale l'unité de stockage d'énergie 12.

Le signal DeltaV porte une information relative à l'état de santé de l'unité de stockage d'énergie 12. Les signaux Vmax, Vmin et Temp portent quant à eux des informations relatives à l'état interne de l'unité de stockage d'énergie 12 et facilitent le pilotage de celle-ci.

Les tensions élémentaires présentes aux bornes de chacun des éléments supercondensateurs C1 à C10 sont lues.

Le signal Vmax permet au module de pilotage 141 de connaître la valeur de tension présente aux bornes du plus chargé (C2 dans l'exemple de la Fig.2) des éléments supercondensateurs. Connaissant cette valeur Vmax, le module de pilotage 141 peut influer sur la valeur maximale de la tension de charge de l'unité 12, de manière à ne pas risquer de provoquer une surtension destructrice sur l'un des éléments de l'unité 12 ou de provoquer le vieillissement prématuré de l'un d'eux ou de plusieurs d'entre eux.

Comme cela apparaîtra plus clairement dans le paragraphe suivant avec la description du signal DeltaV, le signal Vmax permet également au module 141 de connaître avec précision la valeur d'une tension, Vmin, aux bornes du moins chargé (C9 à la Fig.2) des éléments supercondensateurs, en effectuant la différence entre les deux signaux Vmax et DeltaV. Cette information Vmin est utile notamment lors des phases de décharge. En effet, lors de ces phases, il est souhaitable de ne pas provoquer l'apparition d'une tension négative aux bornes d'un élément supercondensateur qui était peu chargé au départ, car cela pourrait avoir pour conséquence un vieillissement prématuré de l'élément concerné ou une détérioration de l'électronique de mesure.

A partir des décalages en tension présents entre les éléments supercondensateurs et déduits des tensions élémentaires lues aux bornes des éléments supercondensateurs C1 à C10, il est obtenu une information d'état de santé, c'est-à-dire, une information représentative de l'aptitude de l'unité de stockage d'énergie à supercondensateurs à remplir sa fonction dans le système micro-hybride. Cette information d'état de santé de l'unité 12 est portée par le signal DeltaV qui indique la différence de tension entre l'élément supercondensateur qui est le plus chargé et celui qui est le moins chargé. A titre d'exemple, à la Fig.2, l'élément C2, aux bornes duquel est présente la tension Vmax, est l'élément supercondensateur le plus chargé et l'élément C9, aux bornes duquel est présente une tension Vmin, est l'élément supercondensateur le moins chargé.

Des essais réalisés par l'entité inventive montrent que plus les éléments supercondensateurs vieillissent et plus sont élevées les différences sur leurs propriétés électriques, notamment sur les valeurs de courant de fuite et les valeurs capacitives. En fin de vie de l'unité de stockage d'énergie, ces différences dégradent les performances de l'unité 12.

Le signal DeltaV permet au module de pilotage 141 d'être en mesure d'informer le système véhicule sur le fait que l'unité de stockage d'énergie demande à être remplacée, et de décider de façon optimale de la manière d'utiliser l'unité de stockage d'énergie pendant toute sa durée de vie, sachant que la dégradation des performances de l'unité en fin de vie peut être lente.

Le signal Temp permet au module 141 de connaître la température de l'unité de stockage d'énergie 12 et de définir un mode de fonctionnement adapté pour préserver au mieux la santé de l'unité de stockage d'énergie qui généralement supporte mal les trop fortes températures (vieillissement ou destruction).

Les signaux Vmax, Temp et DeltaV sont produits dans l'unité de stockage d'énergie 12 à l'aide de moyens électroniques appropriés. Les signaux Vmax et Vmin peuvent être obtenus par exemple au moyen d'un circuit de comparaison de tensions (non représenté) inclus dans les circuits 1201. Les signaux DeltaV et Temp peuvent être obtenus par exemple au moyen d'un circuit soustracteur et d'un circuit de mesure de température (non représentés) également inclus dans les circuits 1201.

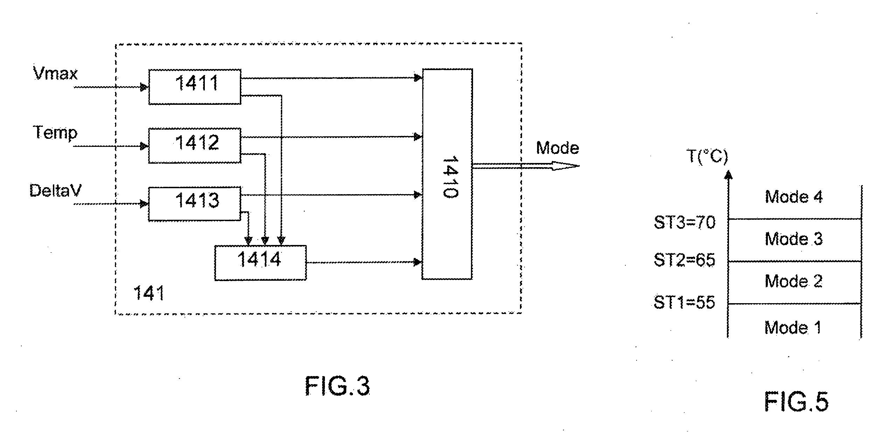

En référence plus particulièrement aux Figs.3, 4A à 4C et 5, il est maintenant décrit le pilotage de l'unité de stockage d'énergie 12 à partir des signaux Vmax, Temp et DeltaV.

Comme montré à la Fig.3, le module de pilotage 141 comporte un module de traitement 1410, un module de gestion de tension maximale Vmax 1411, un module de gestion de température Temp 1412, un module de gestion de différence de tension DeltaV1413 et un module de détection de défaillance 1414.

Le module de traitement 1410 a pour fonction de définir, de manière générale, le mode de fonctionnement du système micro-hybride 1 parmi différents modes disponibles et, en particulier, le mode de fonctionnement de l'unité de stockage d'énergie 12 parmi différents modes disponibles.

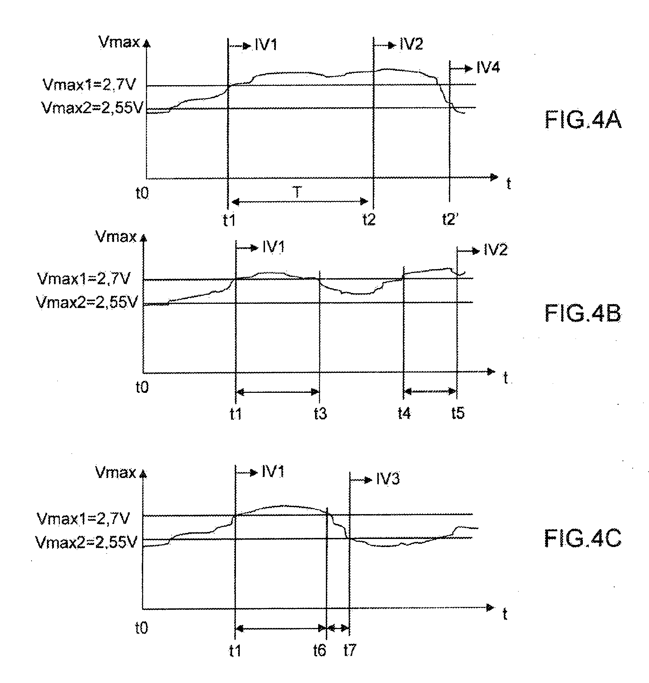

Le fonctionnement du module de gestion de Vmax, 1411, est maintenant décrit en référence plus particulièrement aux Figs.4A à 4C.

Comme montré aux Figs.4A à 4C, deux seuils de tension, à savoir, Vmax1 et Vmax2, sont définis dans le module 1411. Dans cette forme de réalisation, ces seuils de tension ont les valeurs Vmax1 = 2,7 V et Vmax2 = 2,55 V. Le seuil Vmax1 = 2,7 V représente sensiblement la tension nominale maximale d'une cellule élémentaire de supercondensateur de l'unité de stockage d'énergie 12, cette tension nominale maximale étant en fait légèrement supérieure à Vmax1. Le seuil de tension Vmax2 est un seuil défini pour les besoins du procédé selon l'invention.

Dans le cas montré à la Fig.4A, pendant un temps de t0 à t1, la tension Vmax s'accroît jusqu'à atteindre Vmax = Vmax1 à l'instant t1. Conformément à l'invention, une temporisation T est enclenchée à l'instant t1 sur l'évènement Vmax = Vmax1. Cette temporisation T est égale à 1 seconde dans cette forme de réalisation. La temporisation T reste active et un décompte du temps est effectué tant que la tension Vmax reste supérieure à Vmax1. Comme cela apparaît à la Fig.4A, au terme de la temporisation T, compte tenu que la tension Vmax n'est pas descendue en dessous de Vmax1, des mesures, sous la forme d'une limitation de la disponibilité des fonctions du système micro-hybride 1, sont prises pour provoquer une chute de la tension Vmax en interdisant les modes de fonctionnement du système micro-hybride 1 susceptibles de charger davantage les cellules élémentaires de l'unité 12. La tension Vmax chute alors du fait des consommateurs reliés au réseau Vb+X ou suite à une activation de moyens de décharge (non représentés) prévus dans le système micro-hybride 1. Une fois (instant t2') que la tension Vmax a chuté suffisamment pour atteindre le seuil Vmax2, la limitation de la disponibilité des fonctions est annulée et l'ensemble de celles-ci sont à nouveau autorisées.

Toujours dans ce cas de la Fig.4A, à l'instant t1, lorsque Vmax = Vmax1, le module 1411 transmet une information IV1 indiquant au module de traitement 1410 l'imminence d'une interdiction de tous les modes de fonctionnement susceptibles de charger davantage les cellules élémentaires de l'unité 12. A l'instant t2, une information IV2 est transmise au module de traitement 1410 et requiert impérativement cette interdiction des modes chargeant davantage les cellules élémentaires de l'unité 12. A l'instant t2', une information IV4 est transmise au module de traitement 1401 et indique à celui-ci que l'ensemble des modes de fonctionnement sont de nouveau autorisés.

Dans le cas de la Fig.4B, pendant le temps de t0 à t1, la tension Vmax s'accroît jusqu'à atteindre Vmax = Vmax1 à l'instant t1, comme à la Fig.4A. La temporisation T est enclenchée à t1 sur l'évènement Vmax = Vmax1. A un instant t3, alors que la temporisation T n'est pas écoulée, la tension Vmax décroît et atteint le seuil Vmax1. La temporisation T est alors suspendue, mais reste enclenchée et conserve le décompte effectué du temps t3-t1. Comme cela apparaît à la Fig.4B, entre l'instant t3 et un instant t4 ultérieur, la tension Vmax évolue entre les 2 seuils Vmax1 et Vmax2 mais sans franchir aucun de ceux-ci. A l'instant t4, la tension Vmax repasse au-dessus du seuil Vmax1 et, consécutivement, le décompte du temps de la temporisation T reprends et se poursuit jusqu'à un instant t5, la tension Vmax restant supérieure à Vmax entre t4 et t5. A un instant t5, le décompte du temps (t3-t1) + (t5-t4) atteint la durée de la temporisation T la disponibilité des fonctions est limitée de telle manière à provoquer une chute de la tension Vmax. Comme dans le cas de la Fig.4A, cette limitation consiste à interdire tous les modes de fonctionnement du système micro-hybride 1 susceptible de charger davantage les cellules élémentaires de l'unité 12. La tension Vmax chute alors du fait des consommateurs reliés au réseau Vb+X ou suite à une activation de moyens de décharge (non représentés) prévus dans le système micro-hybride 1.

De manière analogue au cas de la Fig.4A, à l'instant t1, lorsque Vmax = Vmax1, le module 1411 transmet l'information IV1 indiquant au module de traitement 1410 l'imminence d'une interdiction de tous les modes de fonctionnement susceptibles de charger davantage les cellules élémentaires de l'unité 12. A l'instant t5, l'information IV2 est transmise au module de traitement 1410 et requiert impérativement cette interdiction des modes chargeant davantage les cellules élémentaires de l'unité 12.

L'exemple de la Fig.4B montre seulement un seul intervalle de temps, de t3 à t4, pendant lequel la tension Vmax reste entre les deux seuils Vmax1 et Vmax2 après l'enclenchement de la temporisation T.

Conformément à l'invention, il peut y avoir plusieurs intervalles de temps tels que t3 à t4 pendant lesquels le décompte du temps est interrompu, mais la temporisation T reste enclenchée, et le décompte reprends lorsque la tension Vmax redevient supérieure à Vmax1. Comme cela apparaîtra plus clairement avec la description ci-dessous du cas montré à la Fig.4C, un dés-enclenchement de la temporisation T, de manière autre qu'à la fin de celle-ci par un décompte du temps égal à T, ne peut se produire que suite à un franchissement du seuil de tension Vmax2, la tension Vmax devenant inférieure à ce seuil.

Dans le cas de la Fig.4C, pendant le temps de t0 à t1, la tension Vmax s'accroît jusqu'à atteindre Vmax = Vmax1 à l'instant t1, comme aux Figs.4A et 4B. La temporisation T est enclenchée à t1 sur l'évènement Vmax = Vmax1. A un instant t6, alors que la temporisation T n'est pas écoulée, la tension Vmax décroît en dessous du seuil Vmax1 et ensuite, à un instant t7, la tension Vmax décroît en dessous du seuil Vmax2 . Lors du franchissement du seuil Vmax1, la temporisation T est suspendue mais reste enclenchée et conserve le décompte effectué du temps t6-t1. Lors du franchissement qui vient ensuite du seuil Vmax2, la temporisation T est désenclenchée. Un décompte ultérieur du temps, enclenché sur un franchissement de Vmax1, comme décrit dans les paragraphes précédents, ne pourra démarrer qu'à partir de zéro.

De manière analogue aux cas des Figs.4A et 4B, à l'instant t1, lorsque Vmax = Vmax1, le module 1411 transmet l'information IV1 indiquant au module de traitement 1410 l'imminence d'une interdiction de tous les modes de fonctionnement susceptibles de charger davantage les cellules élémentaires de l'unité 12. Par contre, de manière différente aux cas des Figs.4A et 4B, à l'instant t7, suite au dés-enclenchement de la temporisation T, une information IV3 est transmise au module de traitement 1410 et indique à celui-ci que l'alerte donnée par IV1 n'a plus d'objet.

Le fonctionnement du module de gestion de Temp 1412 est maintenant décrit en référence plus particulièrement aux Figs.3 et 5.

Conformément à l'invention, différents mode de fonctionnement du système micro-hybride 1 sont prévus en fonction de la température de l'unité de stockage d'énergie 12.

Dans cette forme de réalisation particulière, il est prévu quatre modes, désignés mode 1 à mode 4.

Le mode 1 intervient lorsque le signal TEMP indique une température de l'unité 12 qui est inférieure à ST1=55 °C. Dans ce mode 1, il n'y a pas de limitation imposée par l'unité 12 au fonctionnement du système micro-hybride 1. Toutes les fonctions sont donc autorisées.

Le mode 2 intervient lorsque le signal Temp indique une température de l'unité 12 comprise entre le seuil ST1=55 °C et un seuil ST2=65°C. Dans ce mode 2, seules les fonctions alternateur et démarreur sont autorisées, ce qui rend disponible aussi la fonction d'arrêt-relance automatique du moteur thermique. Par contre, les fonctions de freinage récupératif et d'assistance en couple sont interdites dans le système micro-hybride 1.

Le mode 3 intervient lorsque le signal Temp indique une température de l'unité 12 comprise entre le seuil ST2=65 °C et un seuil ST3=70°C. Dans ce mode 3, toutes les fonctions sont interdites excepté le mode alternateur. La tension continue fournie par la machine 10 est alors régulée à une valeur, par exemple de l'ordre de 18 V, qui doit être suffisante pour maintenir une tension Vb = 14V. La tension Vb+X a dans ce cas une valeur fixe, de l'ordre de 18 V, égale à la tension continue régulée fournie par la machine 10. Les consommateurs sur les deux réseaux de tension, Vb et Vb+X, continuent ainsi à être alimentés.

Le mode 4 intervient lorsque le signal Temp indique une température de l'unité 12 supérieure au seuil ST3=70°C. Dans ce mode 4, la totalité des fonctions peut être interdites, mais une telle interdiction totale ne peut intervenir que lorsque toutes les conditions de sécurité sont satisfaites, à savoir, lorsque le véhicule est à l'arrêt. De plus, le véhicule étant à l'arrêt, une décharge de l'unité 12 à travers une charge appropriée, par exemple une charge résistive, peut également être commandée dans certaines applications. Lorsque toutes les conditions de sécurité ne sont pas remplies pour une interdiction totale des fonctions, la fonction alternateur avec une sortie de tension régulée à une valeur fixe (18 V) est maintenue et un avertissement est donné à l'utilisateur du véhicule pour l'informer d'une température anormale de l'unité 12, d'une prochaine interdiction de la totalité des fonctions et de la nécessité de stationner au plus tôt le véhicule.

Des informations IT1 à IT4 correspondant respectivement aux modes 1 à 4 sont transmises par le module de gestion de Temp 1412 au module de traitement 1410 afin d'informer ce dernier du mode de fonctionnement adapté pour le système micro-hybride 1.

Concernant le module de gestion de DeltaV 1413, celui-ci compare le signal DeltaV à un seuil de tension SD, par exemple SD = 0,2 V dans cette forme de réalisation particulière. Si le dépassement du seuil DeltaV > SD se maintient pendant au moins une durée prédéterminée DD, il est décidé que l'unité de stockage d'énergie 12 est hors service. La durée prédéterminée DD est adaptée en fonction des applications et peut être de quelques minutes, de plusieurs heures voire de plusieurs jours.

Lorsque le cas intervient, une information ID indiquant l'état « hors service » de l'unité 12 est transmise au module de traitement 1410 par le module de gestion de DeltaV 1413. Cette information ID est communiquée par le module de traitement 1410 à une unité de contrôle de véhicule qui se charge d'informer l'utilisateur du véhicule de la nécessité de procéder à un remplacement de l'unité 12. Par contre, il n'est procédé à aucune limitation particulière des fonctions du système micro-hybride 1. Toutes les fonctions restent autorisées pour ne pas limiter la disponibilité du système micro-hybride 1.

Concernant toujours le module de gestion de DeltaV 1413, dans certaines applications de l'invention, lors d'une détection par le module 1413 d'un état « hors service » de l'unité 12, il peut être prévu une gestion différente du signal Vmax, par exemple, avec un accroissement d'un des seuils de tension Vmax1, Vmax2 ou de la temporisation T. Ces dispositions peuvent, dans certaines applications, compenser la perte de certaines, performances afin d'améliorer la disponibilité de l'unité 12.

Concernant le module de détection de défaillance 1414, celui-ci effectue une surveillance notamment des modules de gestion 1411, 1412 et 1413. Lorsqu'une défaillance des modules de gestion est détectée par le module 1414, le système micro-hybride 1 est commandé de manière à limiter autant que possible le courant dans l'unité de stockage d'énergie 12 de manière à éviter une éventuelle détérioration de celle-ci. Dans cette forme de réalisation, la limitation effectuée se traduit par une interdiction des fonctions d'arrêt-relance automatique du moteur thermique, de freinage récupératif et d'assistance en couple et par une fonction alternateur avec régulation à une tension continue fixe (par exemple 18 V), comme dans le cas traité plus haut du mode 3 pour le module de gestion de Temp 1412.

## Revendications

1. Procédé de pilotage d'une unité de stockage d'énergie à supercondensateurs (12) incluse dans un système micro-hybride pour véhicule automobile apte à assurer des fonctions d'alternateur, de démarreur, d'arrêt-relance automatique du moteur thermique du véhicule, de freinage récupératif et d'assistance en couple, ladite unité de stockage d'énergie (12) comprenant une pluralité de cellules élémentaires de supercondensateur montées en série (C1 à C10) et délivrant des informations (Vmax, Temp, DeltaV) sur son état interne, lesdites informations délivrées par ladite unité de stockage d'énergie (12) incluant une information de tension élémentaire maximum (Vmax) provenant de la cellule élémentaire la plus chargée (C2) et une information de température (Temp) sur la température de ladite unité de stockage d'énergie (12), le procédé comprenant les étapes de comparer ladite information de tension élémentaire maximum (Vmax) à un premier seuil de tension (Vmax1), comparer ladite information de température (Temp) à un premier seuil de température, et décider d'une limitation de la disponibilité desdites fonctions lorsque ladite information de tension élémentaire maximum (Vmax) atteint ledit premier seuil de tension (Vmax1) pendant une durée prédéterminée (T) et/ou lorsque ladite information de température (Temp) atteint ledit au moins un premier seuil de température, **caractérisé en ce que** le procédé comprend également les étapes de :
- comparer également ladite information de température (Temp) à au moins un second seuil de température ;
- interdire (mode 2) ladite fonction de freinage récupératif et/ou de ladite fonction d'assistance en couple lorsque ladite information de température (Temp) atteint ledit premier seuil de température (ST1=55°C) ; et
- interdire ladite fonction d'arrêt-relance automatique du moteur thermique lorsque ladite information de température (Temp) atteint ledit second seuil de température (ST2 = 65°C), ledit second seuil de température étant supérieur audit premier seuil de température (ST1=55°C).

2. Procédé selon la revendication 1, **caractérisé en ce qu'**il comprend également l'étape d'interrompre ladite limitation desdites fonctions d'alternateur et de freinage récupératif lorsque ladite information de tension élémentaire maximum (Vmax) chute et atteint un second seuil de tension (Vmax2) inférieur audit premier seuil de tension (Vmax1).

3. Procédé selon l'une quelconque des revendications 1 ou 2, **caractérisé en ce que** l'étape d'interdire (mode 3) la fonction d'arrêt-relance automatique du moteur thermique comporte également une régulation à une valeur fixe prédéterminée (18 V) d'une tension fournie par la fonction alternateur.

4. Procédé selon l'une quelconque des revendications 1 à 3, **caractérisé en ce que** qu'il comporte également un avertissement (mode 4) donné à un utilisateur du véhicule sur une possible interdiction de l'ensemble desdites fonctions du système micro-hybride lorsque ladite information de température (Temp) atteint un troisième seuil de température (ST3=70°C) supérieur audit second seuil de température (ST2=65°C).

5. Procédé selon la revendication 4, **caractérisé en ce que** ledit premier seuil de température (ST1) est de l'ordre de 55°C et/ou ledit second seuil de température (ST2) est de l'ordre de 65 °C et/ou ledit troisième seuil de température (ST3) est de l'ordre de 70°C.

6. Procédé selon l'une quelconque des revendications 1 à 5, **caractérisé en ce que**, lesdites informations délivrées par ladite unité de stockage d'énergie (12) incluant une information d'état de santé basée sur une différence de tension (DeltaV) entre la cellule élémentaire la plus chargée (C2) et la cellule élémentaire la moins chargée (C9) de ladite unité de stockage d'énergie (12), le procédé comprend les étapes de :
- comparer ladite information d'état de santé (DeltaV) à un troisième seuil de tension (SD=0,2 V) ; et
- lorsque ladite information d'état de santé (DeltaV) atteint ledit troisième seuil de tension (SD=0,2 V), informer un utilisateur dudit véhicule de la nécessité de remplacer ladite unité de stockage d'énergie (12) et/ou accroître ledit premier seuil de tension (Vmax1) et/ou ledit second seuil de tension (Vmax2) et/ou ladite durée prédéterminée (T).

7. Système micro-hybride pour véhicule automobile, comprenant une unité de stockage d'énergie (12) ayant une pluralité de cellules élémentaires de supercondensateur montées en série (C1 à C10) et délivrant des informations (Vmax, Temp, DeltaV) sur son état interne, ladite unité de stockage d'énergie (12) comprend des moyens (141) aptes à une mise en oeuvre du procédé selon l'une quelconque des revendications 1 à 6.

## Patentansprüche

1. Verfahren zum Steuern einer Energiespeichereinheit mit Superkondensatoren (12), die in einem Mikrohybridsystem für Kraftfahrzeuge enthalten ist und die Funktionen eines Wechselstromgenerators, eines Starters, eines automatischen Stopps/Starts der Brennkraftmaschine des Fahrzeugs, der rekuperativen Bremsung und der Drehmomentunterstützung sicherstellen kann, wobei die Energiespeichereinheit (12) mehrere Superkondensator-Elementarzellen umfasst, die in Reihe (C1 bis C10) geschaltet sind und Informationen (Vmax, Temp, DeltaV) über einen internen Zustand liefern, wobei die von der Energiespeichereinheit (12) gelieferten Informationen Informationen über die maximale Elementarspannung (Vmax) der am stärksten geladenen Elementarzelle (C2) und Temperaturinformationen (Temp) über die Temperatur der Energiespeichereinheit (12) enthält, wobei das Verfahren die Schritte des Vergleichens der Informationen (Vmax) über die maximale Elementarspannung mit einem ersten Spannungsschwellenwert (Vmax1), des Vergleichens der Temperaturinformationen (Temp) mit einem ersten Temperaturschwellenwert und des Bestimmens einer Grenze der Verfügbarkeit der Funktionen, wenn die Informationen über die maximale Elementarspannung (Vmax) während einer vorgegebenen Dauer (T) den ersten Spannungsschwellenwert (Vmax1) erreichen und/oder wenn die Temperaturinformationen (Temp) wenigstens den ersten Temperaturschwellenwert erreichen, **dadurch gekennzeichnet, dass** das Verfahren außerdem die folgenden Schritte umfasst:
- Vergleichen der Temperaturinformationen (Temp) auch mit wenigstens einem zweiten Temperaturschwellenwert;
- Unterbinden (Modus 2) der Funktion der rekuperativen Bremsung und/oder der Drehmomentunterstützungsfunktion, wenn die Temperaturinformationen (Temp) den ersten Temperaturschwellenwert (ST1 = 55 °C) erreichen; und
- Unterbinden der Funktion des automatischen Stopps/Starts der Brennkraftmaschine, wenn die Temperaturinformationen (Temp) den zweiten Temperaturschwellenwert (ST2 = 65 °C) erreichen, wobei der zweite Temperaturschwellenwert höher ist als der erste Temperaturschwellenwert (ST1 = 55 °C).

2. Verfahren nach Anspruch 1, **dadurch gekennzeichnet, dass** es außerdem den Schritt des Unterbrechens des Begrenzens der Funktionen des Wechselstromgenerators und der rekuperativen Bremsung umfasst, wenn die Informationen über die maximale Elementarspannung (Vmax) abfallen und einen zweiten Spannungsschwellenwert (Vmax2) erreichen, der niedriger als der erste Spannungsschwellenwert (Vmax1) ist.

3. Verfahren nach einem der Ansprüche 1 oder 2, **dadurch gekennzeichnet, dass** der Schritt des Unterbindens (Modus 3) der Funktion des automatischen Stopps/Starts der Brennkraftmaschine außerdem eine Regulierung auf einen vorgegebenen festen Wert (18 V) einer Spannung, die von der Wechselstromgeneratorfunktion geliefert wird, umfasst.

4. Verfahren nach einem der Ansprüche 1 bis 3, **dadurch gekennzeichnet, dass** es außerdem eine gegebene Meldung (Modus 4) für einen Anwender des Fahrzeugs über eine eventuelle Unterbindung der Gesamtheit der Funktionen des Mikrohybridsystems umfasst, wenn die Temperaturinformationen (Temp) einen dritten Temperaturschwellenwert (ST3 = 70 °C) erreichen, der höher ist als der zweite Temperaturschwellenwert (ST2 = 65 °C).

5. Verfahren nach Anspruch 4, **dadurch gekennzeichnet, dass** der erste Temperaturschwellenwert (ST1) in der Größenordnung von 55 °C liegt und/oder dass der zweite Temperaturschwellenwert (ST2) in der Größenordnung von 65 °C liegt und/oder dass der dritte Temperaturschwellenwert (ST3) in der Größenordnung von 70 °C liegt.

6. Verfahren nach einem der Ansprüche 1 bis 5, **dadurch gekennzeichnet, dass** die von der Energiespeichereinheit (12) gelieferten Informationen Informationen über den Funktionszustand enthalten, die auf einer Spannungsdifferenz (DeltaV) zwischen der am stärksten geladenen Elementarzelle (C2) und der am wenigsten geladenen Elementarzelle (C9) der Energiespeichereinheit (12) beruhen, wobei das Verfahren die folgenden Schritte umfasst:
- Vergleichen der Informationen über den Funktionszustand (DeltaV) mit einem dritten Spannungsschwellenwert (ST = 0,2 V); und
- wenn die Informationen über den Funktionszustand (DeltaV) den dritten Spannungswert (ST = 0,2 V) erreichen, Informieren eines Anwenders des Fahrzeugs über die Notwendigkeit, die Energiespeichereinheit (12) auszutauschen und/oder den ersten Spannungsschwellenwert (Vmax1) und/oder den zweiten Spannungsschwellenwert (Vmax2) und/oder die vorgegebene Dauer (T) zu erhöhen.

7. Mikrohybridsystem für Kraftfahrzeug, das eine Energiespeichereinheit (12) umfasst, die mehrere Superkondensator-Elementarzellen besitzt, die in Reihe (C1 bis C10) geschaltet sind, und das Informationen (Vmax, Temp, DeltaV) über einen internen Zustand liefert, wobei die Energiespeichereinheit (12) Mittel (141) umfasst, die das Verfahren nach einem der Ansprüche 1 bis 6 ausführen können.

## Claims

1. Method for controlling a supercapacitor energy storage unit (12) included in a micro-hybrid system for a motor vehicle suitable for ensuring alternator, starter, automatic stop-restart functions of the heat engine of the vehicle, regenerative braking and torque assistance functions, said energy storage unit (12) comprising a plurality of individual supercapacitor cells mounted in series (C1 to C10) and delivering information (Vmax, Temp, DeltaV) concerning its internal status, said information delivered by said energy storage unit (12) including information on maximum individual voltage (Vmax) from the most charged individual cell (C2) and temperature information (Temp) concerning the temperature of said energy storage unit (12), the method comprising steps of comparing said maximum individual voltage information (Vmax) with a first voltage threshold (Vmax1), comparing said temperature information (Temp) with a first temperature threshold, and deciding on a limitation of the availability of said functions when said maximum individual voltage information (Vmax) reaches said first voltage threshold (Vmax1) for a predetermined duration (T) and/or when said temperature information (Temp) reaches said at least one first temperature threshold, **characterized in that** the method also comprises steps of:
- also comparing said temperature information (Temp) with at least one second temperature threshold;
- prohibiting (mode 2) said regenerative braking function and/or said torque assistance function when said temperature information (Temp) reaches said first temperature threshold (ST1 = 55°C); and
- prohibiting said automatic stop-restart function of the heat engine when said temperature information (Temp) reaches said second temperature threshold (ST2 = 65°C), said second temperature threshold being higher than said first temperature threshold (ST1 = 55°C).

2. Method according to Claim 1, **characterized in that** it also comprises the step of stopping said limitation of said alternator and regenerative braking functions when said maximum individual voltage information (Vmax) drops and reaches a second voltage threshold (Vmax2) lower than said first voltage threshold (Vmax1).

3. Method according to either of Claims 1 and 2, **characterized in that** the step of prohibiting (mode 3) the automatic stop-restart function of the heat engine also includes a regulation with a predetermined fixed value (18 V) of a voltage supplied by the alternator function.

4. Method according to any one of Claims 1 to 3, **characterized in that** it also includes a warning (mode 4) given to a user of the vehicle on a possible prohibition of all of said functions of the micro-hybrid system when said temperature information (Temp) reaches a third temperature threshold ((ST3 = 70°C) higher than said second temperature threshold (ST2 = 65°C).

5. Method according to Claim 4, **characterized in that** said first temperature threshold (ST1) is of the order of 55°C and/or said second temperature threshold (ST2) is of the order of 65°C and/or said third temperature threshold (ST3) is of the order of 70°C.

6. Method according to any one of Claims 1 to 5, **characterized in that**, said information delivered by said energy storage unit (12) including health status information based on a voltage difference (DeltaV) between the most charged individual cell (C2) and the least charged individual cell (C9) of said energy storage unit (12), the method comprises the steps of:
- comparing said health status information (DeltaV) with a third voltage threshold (SD = 0.2 V); and
- when said health status information (DeltaV) reaches said third voltage threshold (SD = 0.2 V), informing a user of said vehicle of the need to replace said energy storage unit (12) and/or increasing said first voltage threshold (Vmax1) and/or said second voltage threshold (Vmax2) and/or said predetermined duration (T).

7. Micro-hybrid system for a motor vehicle, comprising an energy storage unit (12) having a plurality of individual supercapacitor cells mounted in series (C1 to C10) and delivering information (Vmax, Temp, DeltaV) concerning its internal status, said energy storage unit (12) comprises means (141) suitable for implementing the method according to any one of Claims 1 to 6.
